# EUROPEAN PATENT SPECIFICATION

(11) **EP 2 735 645 B1**
(45) Date of publication and mention of the grant of the patent: **08.03.2017**
(21) Application number: 13188366.2
(22) Date of filing: 11.10.2013
(51) Int. Cl.: B29D 99/00, D06N 3/00, B32B 27/06, B32B 27/08, B32B 27/12, B32B 27/20, B32B 27/40, B32B 5/18, B32B 5/20, B32B 5/24, D06N 3/06, D06N 3/08, D06N 7/00, B32B 27/30

(54) **Method of manufacturing a floor covering**
Verfahren zur Herstellung eines Bodenbelags
Procédé de fabrication d'un revêtement de sol

(30) Priority: 23.11.2012 GB 201221147
(43) Date of publication of application: 28.05.2014
(73) Proprietor: James Halstead PLC, Radcliffe, Manchester M26 1JN (GB)
(72) Inventor: Smith, Robert, Manchester, Lancashire M26 1JN (GB)
(74) Representative: Brooke-Jones, Helen Anne

(56) References cited:
- WO-A1-2009/156707
- WO-A1-2013/079950
- US-A- 4 100 318
- US-A- 4 303 695
- US-A- 5 632 844
- US-A1- 2005 042 438
- US-A1- 2005 281 997
- US-A1- 2011 268 933

## Description

The present invention relates to a method of manufacturing a floor covering having sustainable slip-resistance and sound attenuation properties, particularly for manufacturing a single heterogeneous product capable of reducing levels of sound resulting from high impact interactions and providing the required sustainable, (long-lasting) slip-resistance properties.

The ability to reduce the levels of sound resulting from high impact interactions is a desirable feature in many residential and commercial establishments to maintain a more peaceful and noise-free environment.

This is particularly the case in establishments such as homes, schools, hospitals, care homes, laboratories, shops, cafes and restaurants, sports centres, community buildings, and reception/foyer areas of buildings. Such establishments usually hence arrange for the installation of flooring having favourable acoustic properties.

In addition to the enhanced acoustic properties of such flooring, it is often the case that such establishments have areas which are normally dry but which may also be also prone to liquid spillages. These establishments hence also require floor coverings which offer an enhanced slip resistance in order to reduce the likelihood of accidents caused by people slipping.

According to the UK Health and Safety Executive (HSE), there are over 35,000 injuries per year caused by slips and trips in the UK alone. This accounts for approximately one of every three major non-fatal injuries, as well as approximately one in every five injuries in the workplace. Floor coverings having higher coefficients of friction are one way of trying to reduce the number of such injuries. A number of floor coverings providing slip-resistance properties are currently commercially available.

If an establishment requires sound attenuation in addition to a slip-resistant floor covering, often, the installation of two discrete products is required.

Typically, a separate acoustic underlayment needs to be installed followed by an anti-slip or safety floor covering there over. This combination of two floorings presents a number of significant disadvantages; firstly, the installation procedure for the two separate products is complicated and more expensive, both in monetary and time terms; secondly, the differential thermal expansion and differential movement between the products causes problems; and thirdly, the production costs are naturally higher for two products than they would be for one.

An additional consideration is the requirement for a decorative or attractive floor covering in most environments.

Whilst methods are generally available to incorporate a decorative element into a slip-resistant floor covering, which simply requires building up a product from the bottom upwards, it has proven difficult to develop the appropriate machinery and methods that can produce a single heterogeneous product incorporating decoration, sustainable slip-resistance and sound attenuation properties that will (a) perform as required and (b) not de-laminate.

WO2009156707 discloses a wear-resistant, printed floor coverings having slip-resistance and providing a sound attenuation effect with an acoustic impact sound reduction of at least about 15 decibels whose method of production encompasses two inversion steps.

Before the invention, two discrete layers nufactured independently, one offering slip resistance and one providing sound attenuation, would have had to be installed one on top of the other, with all the difficulties this presents.

It would therefore be desirable to provide a suitable method to manufacture a heterogeneous floor covering, which is not only robust, but decorative and with both sustainable slip-resistance properties and sound attenuation properties.

Therefore, in accordance with the present invention there is provided a method of manufacturing a decorative heterogeneous floor covering comprising a sound attenuation effect with an acoustic impact sound reduction of at least about 15 decibels and sustainable slip-resistance properties, the method comprising the steps of:
a) providing a print layer comprising a print decoration/ design thereon;
b) providing a wear layer over said print layer to provide a print/ wear layer intermediate; and
c) providing a foam backing layer on the intermediate, the backing layer being capable of providing said sound attenuation effect;
wherein between steps (a) and (b), the method comprises inverting the print/ wear layers intermediate before applying the backing layer to a reverse side / base thereof.

With this arrangement, wear layer can be laid and processed on the print layer. The bonded print/ wear layer intermediate can then be inverted to apply the backing layer, which is processed into a foam. This method is efficient since it requires only a single inversion of the print/ wear layer intermediate to apply the backing layer. Furthermore, the method ensures that the characteristics of the foam backing layer is not at risk of being compromised by being subjected to unnecessary heat curing steps, since high temperatures and pressure loadings can damage the foam structure once formed, thereby affecting the sound attenuation properties.

By "sound attenuation" effect it is meant that the second layer is capable of reducing the volume and intensity of a sound when an object impacts upon the floor covering.

Preferably, the wear layer is applied as a gel.

Preferably, therefore, step (b) comprises processing, which may comprise heat curing of the gel. Preferably, the heat curing is conducted at temperatures of between approximately 115ºC and approximately 125ºC for between around 10 to around 30 seconds, more preferably, at approximately 120°C for between around 15 to 20 seconds, most preferably for 18 seconds.

Preferably, the wear layer comprises particulate material at least partially embedded therein. Preferably, therefore, prior to processing of the wear layer, step (b) comprises scatter application of particulate material. Preferably, the particulate material is allowed to at least partially, preferably fully, embed itself in the unprocessed wear layer.

Preferably, the particulate material is allowed to substantially completely embed in the transparent wear layer. Most preferably, substantially all of the particulate material is fully embedded in the wear layer, although it will be appreciated that as the wear layer erodes or "wears" through subsequent use as a floor covering, the particulate material may be gradually exposed.

The wear layer is preferably transparent. Preferably, the wear layer comprises a quantity of a particulate material providing a high coefficient of friction. With this arrangement, the slip resistance of the floor covering is improved and is sustainable throughout the life of the product.

Preferably, the wear layer comprises PVC. The wear layer may further comprise one or more of a stabiliser, an anti-static agent and a bacteriostat.

Preferably, the bacteriostat comprises an antimicrobial additive.

Preferably, the wear layer comprises a surface finish. Preferably, the surface finish comprises an embossed surface specifically designed to impart the necessary slip-resistance whilst exhibiting low soil pick-up tendencies. Preferably, the emboss comprises a combination of micro-and macro-scale emboss patterns, which may range from about 30 µm to about 160 µm, respectively, in depth. Different emboss patterns may be used dependent upon the decoration of the print layer. For example, a wood grain emboss may be specifically designed to suit a print decoration/ design of a reproduction wood effect.

The micro-scale embossing may comprise indentations of between about 40-50 µm depth, more preferably, between about 42-45 µm. The macro-scale embossing may comprise indentations of between about 100-120 µm, more preferably, about 110 µm. The macro-scale emboss may cover between about 10-20% and more preferably about 15% of the surface area of the wear layer.

Preferably, the surface finish on the wear layer is applied after the application and processing of the backing layer.

Preferably, the particulate material comprises aluminium oxide, which may be white or clear aluminium oxide, although it is appreciated that other suitable particulate materials having a high coefficient of friction may be used, such as quartz or a silicon carbide.

Preferably, the particles of the particulate material have an average size of between about 0.50-0.75 mm, more preferably between about 0.59-0.71 mm across their widest points.

The particle size of the particulate material in the wear layer ensures that as the emboss begins to wear, the particulate material imparts sustainable slip-resistance properties throughout the life of the product.

Preferably, the particles are typically distributed across the covering in an amount of about 100-300 g/m2, typically about 200 g/m2. The size of the clear particulate material allows any floor designs situated under the wear layer to be highly visible, without being obscured by particles as is the case with some other slip-resistant floor coverings.

Preferably, the backing layer comprises an acoustic impact sound reduction of at least about 19 decibels.

Preferably, the backing layer is applied as a liquid, which is preferably a plastisol. Preferably, therefore, step (c) comprises processing of the plastisol liquid.

Preferably, the plastisol comprises a mix of one or more chemical substances which emit gas when exposed to heat during the production process, thus creating the bubbles and foam effect in the material. Preferably, the chemical substances comprise a blowing agent. Preferably, the blowing agent comprises azodicarbonamide. Preferably, the foaming comprises an increase in heat to form the gas or (gases), which creates small pockets or bubbles.

Preferably, the processing of the backing layer comprises blowing and curing steps. Preferably, a first stage comprises processing at a temperature of between approximately 140ºC to 160ºC. Preferably a second stage comprises processing at a temperature of between approximately 160ºC to 180ºC. Preferably, a third and/or a fourth stage comprises processing at a temperature of between approximately 178ºC to 198ºC. Preferably, a fifth stage comprises processing at a temperature of between approximately 170ºC to 190ºC. Preferably, the total processing time for all of the blowing and curing steps is approximately 4 ½ minutes to 5 ½ minutes.

Preferably, during foaming, the blowing agent and process temperature is increased or decreased to change the density, stiffness and foam thickness. Preferably, during foaming, the processing temperature remains even across the width of the oven. Preferably also, during foaming, even air flow is maintained across the width of the oven. With this arrangement, a compromise between two conflicting properties can be reached, those being (1) residual indentation - which is typically kept less than about 0.2 mm, and (2) acoustic impact sound reduction, which is as much as or greater than about 19 decibels.

Preferably, the gel of the unprocessed backing layer comprises PVC (polyvinyl chloride). The gel may further comprise one or more of a plasticiser, a filler, and a stabiliser.

Preferably, the print layer comprises PVC. Preferably, the print layer also comprises one or more of a plasticiser, filler, a stabiliser, a pigment and an anti-static agent. Preferably, step (a) of the method comprises applying a print layer and then printing the decoration thereon. Preferably, the decoration is applied using a multi-station gravure printing system.

Preferably, the print layer is heat cured. Preferably, the heat curing is conducted at temperatures of between approximately 60ºC and approximately 70ºC for between around 4 to around 8 seconds, more preferably, at approximately 65ºC for around 6 seconds. This layer provides the aesthetic aspect of the covering. Any print design can be used thereon as desired, such as wood or stone effect designs as natural replications, or even abstract designs.

Preferably, the method further comprises the addition of a reinforcing layer. The reinforcing layer may be provide the initial or starting component. Therefore, the method may comprise a precursor step before step (a) comprising providing a reinforcing layer. The method may comprise applying the print layer to an upper surface to the reinforcing layer. Therefore, the backing layer may be applied to an underside of the reinforcing layer.

With the addition of this layer at the very beginning of the method, the processing capability and also the dimensional stability of the floor covering is improved. Furthermore, since the reinforcing layer is provided between the wear/ print layer intermediate and the foam backing layer, its ability to resist impact damage and indentations in the foam layer is increased.

Preferably, the reinforcing layer comprises glass fibre, more preferably, a polyvinyl chloride (PVC) impregnated glass fibre.

Preferably, the reinforcing layer is encapsulated. Preferably, encapsulation comprises applying a plastisol coating to impregnate the glass fibre with PVC. Preferably, the encapsulated reinforcing layer is heat cured. Preferably, the heat curing is conducted at temperatures of between approximately 155ºC and approximately 165ºC for between around 10 to around 30 seconds, more preferably, at approximately 160ºC for between around 15 to 20 seconds, most preferably for 18 seconds.

The method may comprise the addition of a coating to the wear layer. The coating may comprise an approximately 100% radiation curing lacquer system. Preferably, the coating comprises a quantity of a particulate material having a high coefficient of friction. Again, the particulate material may comprise aluminium oxide, such as white or clear aluminium oxide, but it may also be another particulate material. The particulate material in the coating may, or may not, be the same particulate material which is present in the wear layer. Preferably, however, the same particulate material is used in both the coating and the wear layer.

The lacquer of the coating may comprise a cross-linking polymer, such as polyurethane (PU), polyester, acrylic or an epoxy-containing material. The polymer may be cross-linked by exposure to radiation, such as high energy ultra-violet radiation.

Preferably, the coating comprises a dry film thickness in the region of about 15-25 µm, more preferably, about 20 µm. The coating provides an improved resistance to scuffing, chemical staining, abrasion, picking up of dirt, and a further improvement in the initial slip-resistance of the floor covering.

The method may comprise the inclusion of a felted fibre or fleece base layer. The base layer may be applied to the backing layer. The base layer may simply be adhered to the backing layer with an adhesive.

The plasticiser in one or all of the relevant layers may comprise one or more of di-isononyl phthalate or dioctyl terephthalate. However, one or all of the relevant layers may comprise one or more of any other suitable plasticiser known in the art, such as phthalic acid esters, terephthalic acid esters, dibenzoate and mono benzoate esters, epoxidised oils, phosphate esters, citrate esters, adipate esters, alkyl sulphonic acid esters, and hydrogenated phthalic acid esters such as Diisononyl 1,2-cyclohexane dicarboxylate.

Preferably, the filler in all of the relevant layers comprises calcium carbonate.

Preferably, the stabiliser in all of the relevant layers comprises one of either: zinc oxide or calcium zinc or an epoxised soybean oil.

Preferably, the anti-static agent in all of the relevant layers comprises an antistatic plasticiser such as Markstat 60.

While these materials are exemplary of what materials could be used to perform each of these functions, they are of course not the only materials which could be used and other such materials are also envisaged within the scope of the invention.

Preferably, the floor covering of the invention is between about 3.5-4.0 mm thick, with the wear layer being typically between about 0.5-0.7 mm thick, although these respective thicknesses may be increased or reduced as required.

The invention will now be described further by way of example with reference to the following figure which is intended to be illustrative only and in no way limiting upon the scope of the invention.

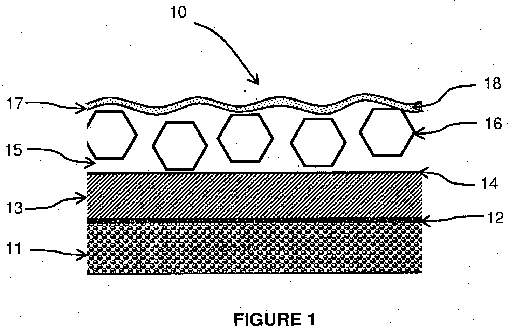

Figure 1 shows a representation of a floor covering 10 in accordance with the invention comprising: a foam backing layer 11 as its bottom layer; a reinforced PVC impregnated glass fibre layer 12; a print layer 13 with a print design 14 thereon; a transparent wear layer 15 comprising approximately 200 g/m² of white aluminium oxide particles 16 embedded therein with an average particle size of approximately 0.59-0.71 mm; and a polyurethane coating layer 17 white aluminium oxide particles 18 embedded therein with an average particle size of approximately 0.02 mm (20µm).

In a preferred embodiment, the method comprises the following steps:

### 1. Formation of the reinforcing layer

A glass fibre substrate is encapsulated with a liquid plastisol (comprising a mix of PVC, plasticiser, stabiliser and minor liquid additives), which is then gelled onto a heated drum at a temperature of approximately 160ºC +/- 5ºC for approximately 18 seconds +/- 5 seconds, in order to form the reinforcing layer 12.

### 2. Application of the print layer

A print layer substrate comprising a mix of PVC, a plasticiser, a filler, a stabiliser, a pigment and an anti-static agent is prepared and applied over the reinforcing layer 12. The substrate is gelled onto a heated drum at a temperature of approximately 155ºC +/-5ºC for approximately 18 seconds +/- 5 seconds. The print layer 13 in combination with the reinforcing layer 12 is directed through a multi-station gravure printing system to apply the print design 14. The print design 14 is dried before further processing.

### 3. Application of the Wear layer

A gel comprising PVC a stabiliser, an anti-static agent and a bacteriostat (with an antimicrobial additive) is applied over the print design 14. A particulate material 16 comprising aluminium oxide, which may be white or clear aluminium oxide, having an average size of between about 0.59-0.71 mm across their widest points is scattered across the wet gel and allowed to fully embed in the gel. The particles are distributed across the covering in an amount of about 200 g/m².

The gel is then heat cured at a temperature of approximately 120ºC +/-5ºC for approximately 18 seconds +/- 5 seconds to form the transparent wear layer 15 on the print layer 13.

### 4. First inversion

The product at this stage is inverted such that a lower side of the reinforcing layer 12 is accessible.

### 5. Application of the backing layer

A plastisol mix of PVC (polyvinyl chloride), one or more of a plasticisers, a filler, a stabiliser and an azodicarbonamide blowing agent is prepared.

The mix is applied to the lower side of the reinforcing layer 12 and gelled. The foam is blown by passing the construct through an oven as follows:
Stage 1:- at a temperature of approximately 150ºC +/-10°C;
Stage 2:- at a temperature of approximately 170ºC +/-10ºC;
Stage 3:- at a temperature of approximately 188ºC +/-10ºC;
Stage 4:- at a temperature of approximately 188°C +/-10ºC; and
Stage 5:- at a temperature of approximately 180ºC +/-10ºC.

The total processing time for the five stages is 5 minutes +/- 30 seconds to create the foam backing layer 11.

### 6. Mechanical embossing the wear layer

The wear layer 15 is contacted with a belt with a profiled surface in order to emboss the surface thereof. The profile is adapted to provide a combination of micro-and macro-scale emboss patterns, which range from about 30 µm to about 160 µm, respectively, in depth on the wear layer 15. The profile provides micro-scale embossing comprise indentations of between about 40-50 µm depth. The profile further provides macro-scale embossing comprises indentations of between about 100-120 µm and provides coverage on between about 10- 20% and of the surface area of the wear layer 15.

The wear layer 15 is then cooled.

### 7. Second inversion

The product at this stage is inverted such that the wear layer 15 is accessible.

### 8. Application of the coating

A 100% radiation curing lacquer is prepared by mixing a polyurethane cross-linking polymer with a particulate white or dear aluminium oxide (or silica or aluminium oxide) having an average size of about 0.02 mm across their widest points.

The lacquer is applied to the embossed surface of the wear layer 15 and is then cross-linked (cured) by exposure to radiation, such as high energy ultra-violet radiation.

The coating comprises a dry film thickness in the region of about 15-25 µm.

### 9. Final processing

The final floor covering is inspected, cut into 20 m long rolls and packaged.

The present invention makes it possible for what has always previously been two separate and discrete products to be combined in one single heterogeneous product. This allows for savings to be made on transportation and installation costs, installation time and problems encountered when installing two separate products, the cost of the product itself as it will inevitably be cheaper to produce and sell than two separate products, and packaging.

With the resultant floor covering, the transparency of the wear layer 15 allows the print design 14 to be visible.

The floor covering of the invention has been specifically designed to be HSE compliant, i.e. to have a rating of 36 or more in the HSE pendulum coefficient of friction (C0F) test and 20 µm or more in the surface roughness requirement, both of which values represent a low slip potential.

Accordingly, the flooring 10 comprises a sustainable three-stage slip-resistance: an initial stage of slip resistance is provided by the embossed surface of the wear layer 15, which is mirrored by the thin coating 17 thereon, which will be gradually worn away; a second stage is provided by the particulate material 18 in the coating 17; once the first and second stages have been exhausted, a third stage of slip-resistance is provided by the particulate in the wear layer 15.

The enhanced slip resistance of the floor has been tested by the reduction of identifiable particles in the wear layer when subjected to 50,000 wear test cycles to ensure the reduction in identifiable particles is less than 10%, thereby ensuring sustainable slip throughout the product's lifespan. Furthermore, the floor covering has been further tested by evaluating with a bio-mechanical foot:- the floor covering is subjected to 1,000,000 footsteps and then tested to ensure the slip characteristics of the product as it leaves the factory are the same after a simulated 10 year lifespan.

The foam backing layer or sound attenuation layer, improves the underfoot comfort in comparison with standard compact safety floors. This provides benefits where the flooring is used in areas where people are required to stand for prolonged periods of time, such as behind bar areas, cafes or in retail establishments, as the covering is ergonomically designed to provide anti-fatigue benefits.

The floor covering of the invention is substantially resistant to permanent stains from most or all conventional household materials. It is also long-lasting and durable, maintaining the new-look' appearance for longer. As the particulate material is typically embedded within the clear wear layer, particles are not lost or broken from contact as they are in some existing slip-resistant floor coverings.

The floor covering of the invention is flexible and easy to install. It is primarily intended for use in residential and commercial establishments where high impact sound reduction is important, and/or for areas which are normally dry but are liable to be subject to liquid spillages, making the slip-resistant property of the covering an important consideration. This is particularly the case in establishments such as homes, schools, hospitals, care homes, laboratories, shops, cafes and restaurants, sports centres, community buildings, and reception/foyer areas of buildings.

It is of course to be understood that the present invention is not intended to be restricted to the foregoing examples which are described by way of example only.

## Claims

1. A method of manufacturing a decorative heterogeneous floor covering comprising a sound attenuation effect with an acoustic impact sound reduction of at least about 15 decibels and sustainable slip-resistance properties, the method comprising the steps, in order, of:
a) providing a print layer comprising a print decoration/design thereon;
b) providing a wear layer over said print layer to provide a print/wear layer intermediate; and
c) providing a foam backing layer on the intermediate, the backing layer being capable of providing said sound attenuation effect;
**characterised in that** between steps (b) and (c) the method comprises inverting the print/wear layer intermediate before applying the backing layer to a reverse side/base thereof.

2. The method according to claim 1, wherein the wear layer is applied as a gel which is heat cured.

3. The method according to claim 2, wherein prior to processing (curing) of the wear layer, step (b) comprises scatter application of a particulate material.

4. The method according to claim 3, wherein the particulate material is allowed to at least partially embed itself in the unprocessed (gel) wear layer.

5. The method according to any one of claims 1-4, wherein the method comprises providing the wear layer with a surface finish.

6. The method according to claim 5, wherein the surface of the wear layer is embossed.

7. The method according to claim 6, wherein the emboss comprises a combination of micro-and macro-scale emboss patterns, which range from about 30 µm to about 160 µm, respectively, in depth.

8. The method according to any one of claims 5-7, wherein the surface finish on the wear layer is applied after the application and processing of the backing layer.

9. The method according to any one of claims 1-8, wherein the backing layer comprises an acoustic impact sound reduction of at least about 19 decibels.

10. The method according to any one of claims 1-9, wherein the backing layer is applied as a liquid and subsequent processing of the backing layer comprised blowing and curing steps.

11. The method according to any one of claims 1-10, wherein the method further comprises the addition of a reinforcing layer comprising glass fibre, which is encapsulated and heat cured.

12. The method according to claim 11, wherein the reinforcing layer provides the initial or starting component of the flooring and the print layer is applied to an upper surface of the reinforcing layer.

13. The method according to claim 12, wherein the backing layer is applied to an underside of the reinforcing layer.

14. The method according to any.one of claims 1-13, wherein a coating is added to the wear layer, the coating comprising substantially 100% radiation curing lacquer system.

15. The method according to claim 14, wherein the coating comprises a quantity of a particulate material having a high coefficient of friction.

## Patentansprüche

1. Verfahren zur Herstellung eines dekorativen heterogenen Fußbodenbelages, der einen Schalldämpfungseffekt mit einer akustischen Trittschallreduzierung von mindestens etwa 15 Dezibel und dauerhafte Antirutscheigenschaften aufweist, wobei das Verfahren nacheinander die folgenden Schritte umfasst:
a) Bereitstellen einer Druckschicht, auf der sich eine aufgedruckte Dekoration/Design befindet;
b) Bereitstellen einer Verschleißschicht über der Druckschicht, um ein Druck-/Verschleißschicht-Zwischenprodukt bereitzustellen; und
c) Bereitstellen einer Schaumträgerschicht auf dem Zwischenprodukt, wobei die Trägerschicht in der Lage ist, den Schalldämpfungseffekt zu bewirken;
**dadurch gekennzeichnet, dass** das Verfahren zwischen den Schritten (b) und (c) das Umkehren des Druck-/Verschleißschicht-Zwischenprodukts umfasst, bevor auf dessen umgekehrte Seite/Basis die Trägerschicht aufgebracht wird.

2. Verfahren nach Anspruch 1, wobei die Verschleißschicht als ein Gel aufgebracht wird, das mittels Wärme ausgehärtet wird.

3. Verfahren nach Anspruch 2, wobei der Schritt (b) vor dem Verarbeiten (Aushärten) der Verschleißschicht das Aufstreuen eines teilchenförmigen Materials umfasst.

4. Verfahren nach Anspruch 3, wobei man das teilchenförmige Material sich mindestens teilweise von selbst in die unverarbeitete (Gel-) Verschleißschicht einbetten lässt.

5. Verfahren nach einem der Ansprüche 1 - 4, wobei das Verfahren umfasst, die Verschleißschicht mit einer Oberflächendeckschicht zu versehen.

6. Verfahren nach Anspruch 5, wobei die Oberfläche der Verschleißschicht geprägt ist.

7. Verfahren nach Anspruch 6, wobei die Prägung eine Kombination von Mikro- und Makroprägemustern umfasst, deren Tiefe jeweils im Bereich von etwa 30 µm bis etwa 160 µm liegt.

8. Verfahren nach einem der Ansprüche 5 - 7, wobei die Oberflächendeckschicht auf der Verschleißschicht nach dem Aufbringen und Verarbeiten der Trägerschicht aufgebracht wird.

9. Verfahren nach einem der Ansprüche 1 - 8, wobei die Trägerschicht eine akustische Trittschallreduzierung von mindestens etwa 19 Dezibel aufweist.

10. Verfahren nach einem der Ansprüche 1 - 9, wobei die Trägerschicht als eine Flüssigkeit aufgebracht wird und das anschließende Verarbeiten der Trägerschicht Treib- und Aushärtungsschritte umfasst.

11. Verfahren nach einem der Ansprüche 1 - 10, wobei das Verfahren des Weiteren das Hinzufügen einer Verstärkungsschicht umfasst, die Glasfasern umfasst, die verkapselt und mittels Wärme ausgehärtet werden.

12. Verfahren nach Anspruch 11, wobei die Verstärkungsschicht die Ausgangs- oder Startkomponente des Bodenbelages bildet und die Druckschicht auf eine Oberfläche der Verstärkungsschicht aufgebracht wird.

13. Verfahren nach Anspruch 12, wobei die Trägerschicht auf eine Unterseite der Verstärkungsschicht aufgebracht wird.

14. Verfahren nach einem der Ansprüche 1 - 13, wobei eine Beschichtung zu der Verschleißschicht hinzugefügt wird, wobei die Beschichtung im Wesentlichen zu 100 % ein strahlungsaushärtendes Lacksystem umfasst.

15. Verfahren nach Anspruch 14, wobei die Beschichtung eine Menge eines teilchenförmigen Materials mit einem hohen Reibungskoeffizienten umfasst.

## Revendications

1. Procédé de fabrication d'un revêtement de sol décoratif hétérogène, ayant un effet d'atténuation du son avec réduction acoustique du son d'impact d'au moins environ 15 décibels et des propriétés prolongées de résistance au glissement, le procédé comprenant, dans l'ordre, les stades de :
a) prévoir une couche d'impression, sur laquelle il y a un dessin/décoration d'impression ;
b) prévoir une couche d'usure sur la couche d'impression pour procurer un intermédiaire couche d'impression/usure et
c) prévoir une couche de dos mousse sur l'intermédiaire, la couche de dos étant apte à procurer l'effet d'atténuation du son ;
**caractérisé en ce que** le procédé comprend, entre les stades (b) et (c), l'inversion de l'intermédiaire couche d'impression/usure avant d'appliquer la couche de dos à son côté/base inverse.

2. Procédé suivant la revendication 1, dans lequel on applique la couche d'usure sous la forme d'un gel qui est durci à la chaleur.

3. Procédé suivant la revendication 2, dans lequel, avant le traitement (durcissement) de la couche d'usure, le stade (b) comprend l'application disséminée d'une matière particulaire.

4. Procédé suivant la revendication 3, dans lequel on laisse la matière particulaire s'incorporer soi-même, au moins en partie, dans la couche d'usure non-traitée (gel).

5. Procédé suivant l'une quelconque des revendications 1 à 4, dans lequel le procédé comprend prévoir la couche d'usure en lui donnant un fini de surface.

6. Procédé suivant la revendication 5, dans lequel la surface de la couche d'usure est gaufrée.

7. Procédé suivant la revendication 6, dans lequel le gaufrage comprend une combinaison de configurations de gaufrage à l'échelle microscopique et à l'échelle macroscopique, qui va d'une profondeur d'au moins 30 µm à environ 160 µm, respectivement.

8. Procédé suivant l'une quelconque des revendications 5 à 7, dans lequel le fini de surface sur la couche d'usure est appliqué après l'application et le traitement de la couche de dos.

9. Procédé suivant l'une quelconque des revendications 1 à 8, dans lequel la couche de dos donne une réduction acoustique du son d'impact d'au moins environ 19 décibels.

10. Procédé suivant l'une quelconque des revendications 1 à 9, dans lequel la couche de dos est appliquée sous la forme d'un liquide et un traitement subséquent de la couche de dos comprend des stades d'insufflation et de durcissement.

11. Procédé suivant l'une quelconque des revendications 1 à 10, dans lequel le procédé comprend, en outre, l'addition d'une couche de renfort comprenant de la fibre de verre, qui est enrobée et durcie à chaud.

12. Procédé suivant la revendication 11, dans lequel la couche de renfort procure le constituant initial de départ du revêtement et la couche d'impression est appliquée sur une surface supérieure de la couche de renfort.

13. Procédé suivant la revendication 12, dans lequel la couche de dos est appliquée à un côté inférieur de la couche de renfort.

14. Procédé suivant l'une quelconque des revendications 1 à 13, dans lequel un revêtement est ajouté à la couche de renfort, le revêtement comprenant un système de vernis durcissant par rayonnement sensiblement à 100%.

15. Procédé suivant la revendication 14, dans lequel le revêtement comprend une certaine quantité d'une matière particulaire ayant un grand coefficient de frottement.
